# EUROPEAN PATENT APPLICATION

(11) **EP 0 666 437 A1**
(43) Date of publication of application: **09.08.1995**
(21) Application number: 94500012.3
(22) Date of filing: 31.01.1994
(51) Int. Cl.: F16H 61/38, A63H 31/06

(54) **Automatic transmission systems with application in electric automobile motors for use by children**

(71) Applicant: Rodriguez Ferre, José Manuel, E-03440 Ibi (Alicante) (ES)
(72) Inventor: Rodriguez Ferre, José Manuel, E-03440 Ibi (Alicante) (ES)
(74) Representative: Christiansen, Henning, Dipl.-Ing.

(57) **Abstract**

The invention comprises a pulley composed of two symmetrical halves (1) and (2), in which the bringing together of the planes of both halves varies the diameters of actuation of the transmission belt (13) and thus the speed-power ratio. The moving half (2) rests by gravity on free bodies (12) which are moved towards the periphery of an enclosure (9) containing them, by the effect of centrifugal force, ascending along ramps (11), and bringing the moving half (2) towards the fixed half (1). A second receptor pulley (14), comprising two halves, moving and fixed, linked flexibly by a spring (16), which compensates the traction force of the belt (13).

## Description

### FIELD OF THE INVENTION

The present Invention Patent relates to improvements in automatic transmission systems with application in electric automobile motors for the use of children, contributing to the function for which they are destined several advantages which will be detailed below, in addition to others inherent to the layout and make-up of the system.

### BACKGROUND OF THE INVENTION

Currently known in the market are toy automobiles in which the child is the user and driver of the vehicle, using same as a means of transport in zones and tracks specifically set aside for the purpose.

In vehicles of this type in which the drive system is made up of one or more battery-powered electric motors, also known are transmission systems comprising gearwheels through which engine revolutions are demultiplied, thus reducing movement of the transmission organs, in order to vary the ratio between transmission and motor revolutions.

This technique, very well known in the art, presents the disadvantage that when the child makes the corresponding gear change, that change occurs sharply, owing to an understandable lack of experience on the part of the child, this defect being most notable as the vehicle pulls away from standstill.

Another disadvantage to be considered is the cost involved in fitting the gearwheels forming the transmission system, and possible breakdown of same.

### SUMMARY OF THE INVENTION

The applicant firm, thanks to its experience in the manufacturing of toy automobiles of the aforesaid type, has designed improvements in automatic transmission systems with application to the electric motors of such vehicles, employing to that end a mechanical solution by means of which progressive speed variation is achieved, without harshness, thereby avoiding frights for the child.

The improvements provided by the present invention comprise a device which presents a general layout in the form of a pulley composed of two symmetrical halves in which the throat is of variable shape as between two trunco-conical bodies. One of the halves moves in an axial direction, by means of the mechanisms built into the device and activated by the centrifugal force or inertia generated by the rotation of the motor. The circles of contact with the transmission belt vary according to the distance between the planes of both halves of the pulley, so that different speed-power ratios can be obtained.

This device or pulley, considered as main or drive device, works in combination with the transmission pulley linked to the corresponding gearwheel. This second pulley is also composed of two symmetrical trunco-conical parts, one of which moves and can travel in an axial direction due to the traction force of the belt connecting the two halves, and has a built-in automatic recovery mechanism to bring the moving part to its minimum-distance rest position.

The improvements described permit various gears to be obtained without sharp jumps in transition between them, while at the same time permitting conventional gearwheel mechanisms to be done without, with the consequent saving of costs.

The improvements of the present Invention Patent offer the advantages described above, together with others which can be deduced easily from the example of embodiment of a transmission system provided with those improvements, which is described in greater detail below in order to facilitate understanding of the characteristics outlined above, together with various information about details, the present report being further accompanied by drawings which, only by way of example and without limitation to the scope of the present invention, show a practical case of embodiment of same.

### BRIEF DESCRIPTION OF THE DRAWINGS

In the drawings:

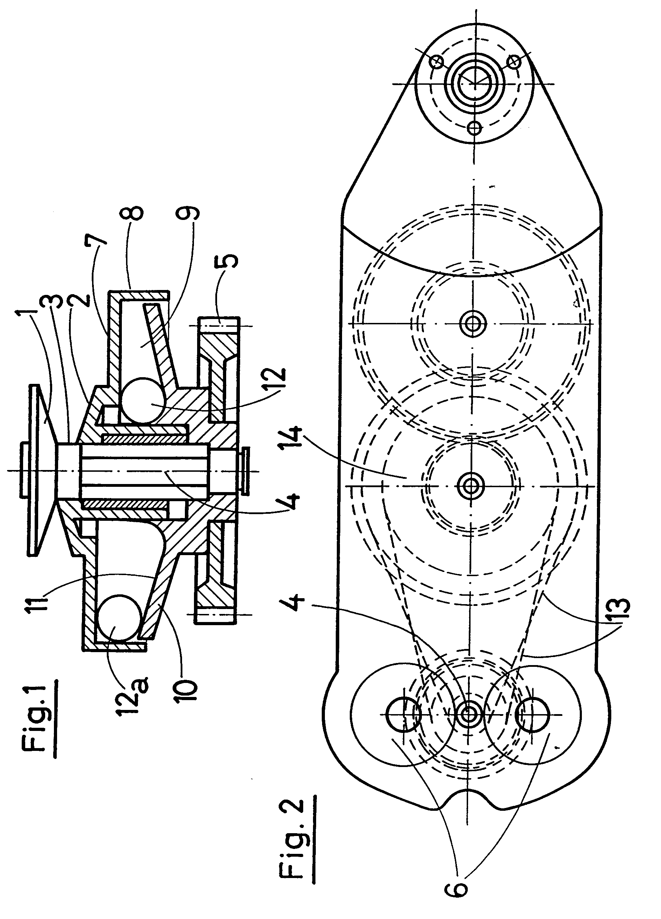

Figure 1 shows an automatic speed variator, provided with the aforesaid improvements, in accordance with a case of embodiment of same, in diametral-section elevation view, in which the moving half of the pulley is illustrated in the two extreme functional positions of minimum and maximum distance from the fixed half.
Figure 2 shows a schematic plan view of the speed variator and movement transmission pulley.
Figure 3 is a diametral-section detail of the transmission pulley, especially designed to implement the compensatory function for variations between centres occasioned by changes of working diameters of the speed variator or main pulley.
Figures 4 and 5 show a variation embodiment of the means of operation of the speed variator or main pulley, in diametral section and plan views.
Figures 6 and 7 show a variation embodiment of the means of operation of the speed variator or main pulley, in diametral section and plan views.
Figures 8, 9 and 10 show details of the means mentioned in figures 6 and 7 above, in their respective projection views.
Figures 11 and 12 show another variation embodiment of the means of operation of the speed variator or main pulley, in diametral-section elevation and plan views.

### DESCRIPTION OF AN EMBODIMENT ACCORDING TO THE INVENTION

In accordance with the drawings, the automatic transmission, provided with the improvements of the invention and in accordance with a principal embodiment thereof, comprises a pulley composed of two halves -1- and -2-, of trunco-conical shape, forming a throat -3- of variable section. Half -1- of the pulley is joined to the shaft -4- of same, while the distal end of the shaft is linked to the crown wheel -5-, which transmits the force from the motor or motors -6- of the vehicle. The other half -2- of the aforesaid pulley moves in an axial direction on the shaft -4-, with a stepped section and a circular radial plane -7- emerging from its conical surface -2-, bent orthogonally at its periphery, in the form of a skirt -8-, to form an enclosed area -9-, in combination with a conical piece -10-, mounted on the shaft -4- and attached to the crown wheel -5-. Owing to its conical shape, that piece -10-offers an inclined plane -11- along which the free rollers -12- slide, which in their rest position occupy a low position near the centre, while during functioning of the motor or motors -6- they are moved by centrifugal force towards the periphery, adopting a high position -12a-, in which they push the moving half -2-7-8- of the pulley, which rests on them by gravity, moving it towards the fixed half -1-, thus varying the actuating diameters of the belt -13-, and with it the speed-power ratio.

The pulley or variator described, formed by the halves -1-2-, is linked to the receptor pulley -14- by a transmission belt -13-. This second pulley -14- is so arranged as to compensate the traction force of the aforesaid belt -13-, by the effect of variation of centres occasioned by the change of working diameter of the automatic variator. To this end, said pulley -14- includes two symmetrical halves -14a- and -14b-, one of which moves on the shaft -15-, and is urged by a spring -16- towards a position near the fixed half. The force of the spring -16-is in function of the power to be transmitted, and the number of teeth of the attached gearwheel in function of the ratio to be obtained.

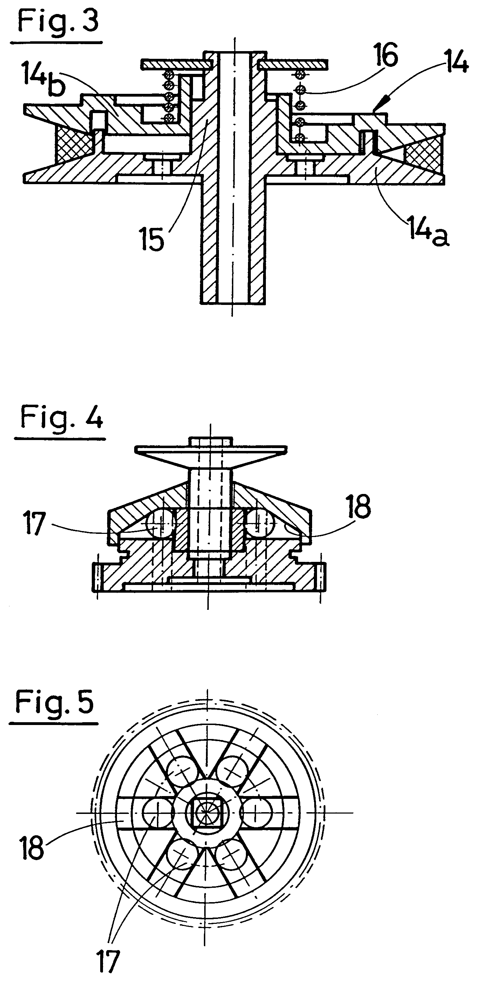

Figures 4 and 5, corresponding to an alternative embodiment of the actuating mechanisms of the speed variator, show for those means some balls -17-, which can move by the action of centrifugal force along the respective radial ramps -18-. The assembly may be mounted directly onto the motor -6-, or with the mesh backing onto and attached to it. The size of the assembly depends on the power to be transmitted and the speed upon starting up. The moving pulley, which is provided with the aforesaid ramps -18-, rests on the balls -17-, which upon moving close or open said pulley, changing the actuation diameters of the belt, and thus the speed-power ratio.

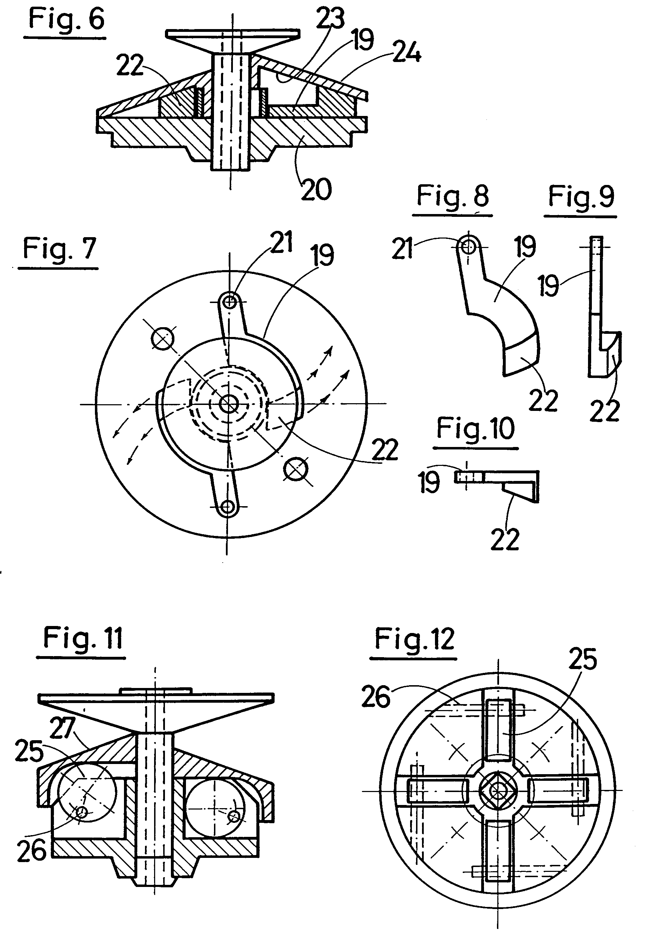

Figures 6 to 10 show an alternative embodiment of the variator of the invention, also actuated by centrifugal force. In this case, the counterweights -19- are attached to the block -20- by means of the pins -21-, which allow them to oscillate freely. At the opposing ends of the spindles are ramps -22-, coinciding formally with the ramps -23- of the moving part -24- of the assembly, so that the diameter increases or diminishes, and with it the speed-power ratio. The size of the assembly depends on the parameters to be achieved.

Figures 11 and 12 show a final alternative embodiment of those which can be developed on the basis of the improvements provided by the present invention. In this case, the eccentric rollers -25- act as counterweights which oscillate on the respective pins -26-. The moving part -27- of the variator pulley rests on said rollers -25-which, when they oscillate under the effect of centrifugal force, move the pulley, opening or closing it. The size and weight of the rollers will vary in function of the power to be achieved.

The improvements provided by the present invention also admit various mechanical solutions based on the action of forces of inertia or a combination of centrifugal force and inertia.

## Claims

1. Improvements in automatic transmission systems with application in electric automobile motors for the use of children, of a type which includes pulleys made up of two symmetrical halves of trunco-conical shape which form a throat of variable section, in which moving together of the planes of both halves alters the contact circles with the transmission belt in order to obtain various speeds, with the pulley being linked by means of the aforesaid belt to a receptor pulley in mesh with the corresponding reduction gear, essentially **characterized** in that one of the halves of the pulley, considered to be fixed, is attached to the shaft on which is fixed the transmission gearwheel for the power supplied by, at least, one electric motor, while the other half of the pulley, considered to be mobile, has limited travel on the aforesaid shaft, promoted by the presence of free masses, on which it rests by gravity, which masses can move under the centrifugal force generated by rotation of the assembly, along ramps or inclined planes towards the periphery of an enclosure which contains them, this enclosure being formed by the aforesaid moving half of the pulley and by a lower piece or block of suitable shape, said masses operating as pushing elements of the moving half of the pulley, moving it closer to the fixed half.

2. Improvements in automatic transmission systems with application in electric automobile motors for the use of children, as claimed in claim 1, **characterized** in that the receptor pulley linked to the pulley or variator by the corresponding transmission belt is composed of two symmetrical halves, fixed and moving respectively, the latter being urged against the fixed half by a spring in function of the power to be transmitted, so that the traction force of the belt is compensated by the effect of variation between centres occasioned by the change of working diameter of the variator.

3. Improvements in automatic transmission systems with application in electric automobile motors for the use of children, as claimed in claim 1, **characterized** in that the moving masses are constituted by rollers.

4. Improvements in automatic transmission systems with application in electric automobile motors for the use of children, as claimed in claim 1, **characterized** in that the moving masses are constituted by spherical bodies.

5. Improvements in automatic transmission systems with application in electric automobile motors for the use of children, as claimed in claim 1, **characterized** in that the ramps or inclined planes on which the moving masses slide are formed on the lower piece or block component of the enclosure which contains said masses.

6. Improvements in automatic transmission systems with application in electric automobile motors for the use of children, as claimed in claim 1, **characterized** in that the ramps on which the moving masses slide are formed on the moving half of the pulley or variator.

7. Improvements in automatic transmission systems with application in electric automobile motors for the use of children, as claimed in claim 1, **characterized** in that the moving masses are constituted by long counterweights attached to the block of the enclosure by means of pins which allow them to oscillate freely by their opposing ends, on which are arranged ramps formally coinciding with planes or ramps provided on the moving half.

8. Improvements in automatic transmission systems with application in electric automobile motors for the use of children, as claimed in claim 1, **characterized** in that the moving masses are constituted by rollers oscillating on respective eccentric pins.
